# EUROPEAN PATENT APPLICATION

(11) **EP 2 174 920 A1**
(43) Date of publication of application: **14.04.2010**
(21) Application number: 08777313.1
(22) Date of filing: 18.06.2008
(51) Int. Cl.: C03C 27/06, B32B 17/10, C03C 17/32, C08G 18/48, C09K 3/18, E06B 3/66, E06B 7/12, F25D 21/04

(54) **METHOD OF SECURING VISIBILITY THROUGH GLASS-PANED WINDOW**

(30) Priority: 17.07.2007 JP 2007185752; 13.03.2008 JP 2008064079
(71) Applicant: Central Glass Company, Limited, Yamaguchi 755-0001 (JP)
(72) Inventor: OUGITANI, Yukihiro, Mie 515-0001 (JP); AKAMATSU, Yoshinori, Mie 515-0001 (JP)
(74) Representative: Manitz, Finsterwald & Partner GbR
(86) International application number: PCT/JP2008/061109
(87) International publication number: WO 2009/011196

(57) **Abstract**

A glass window has a multiple glass structure in which a plurality of glass plates face each other, and a film is formed on the glass plate surface that is exposed to a cold environment when the glass window is closed. The film comprises a urethane resin prepared by a polymerization using at least a polyoxyalkylene-series polyol having an average molecular weight of 400-5000 and a hydrophobic polyol. There is used as the hydrophobic polyol an acrylic polyol having an average molecular weight of 500-5000 or a polyester polyol having an average molecular weight of 500-5000 and a hydroxy value of 10-200 mg KOH/g. Thereby, the film absorbs water that is in contact with the film when the glass window is open, and the film releases the water absorbed in the film when the opened door glass is closed, thereby having a condition that the film can absorb water.

## Description

### TECHNICAL FIELD

The present invention relates to an article having a glass window and relates to a technique to secure visibility of a glass window.

### BACKGROUND OF THE INVENTION

Since a glass window can get lighting to the interior, it is widely used in architectural uses, vehicle uses, container and equipment windows, etc. The interior visibility is secured by using a glass window. For example, a refrigerator or freezer having a glass window can provide visibility of the inside of the refrigerated room or freezer room through the glass window, it is widely used in the retail industry such as supermarket, convenience store, etc.

When one side of a glass window is exposed to a cold environment, there may occur a water condensation to prevent visibility of the glass window. Then, when the cold environment is below freezing point (i.e., freezing environment), the water condensation may appear as a frozen one. This makes it more difficult to secure visibility of the glass window.

A glass window, such as double-glazing, having a multiple glass structure, in which a plurality of glass plates face each other, is superior to a glass window of a single plate in heat insulation. Therefore, it is effective in suppressing the occurrence of water condensation. Thus, a glass window having a multiple glass structure is widely used as a glass window under an environment that one side of the glass window is in a cold environment. Particularly, frequency of usage as a window of a refrigerator or freezer is worthy of special mention.

These glass windows are, however, used in many cases under a condition that they are built in a movable device such as door, cover, door, etc. When the glass window is opened, the glass plate surface that has been in contact with a cold environment, such as a refrigerator room, a freezer room, etc., is brought into a warm environment under a cooled condition. Therefore, water condensation tends to occur on the surface. This prevents visibility after closing the glass window. To solve this, Patent Publication 1 discloses a glass unit system to heat the glass plate surface.
Patent Publication 1: Japanese Patent Application Publication 2002-513507
Patent Publication 2: Japanese Patent Application Publication 11-63793
Patent Publication 3: Japanese Patent Application Publication 2000-309068

### SUMMARY OF THE INVENTION

Regarding the technique to secure visibility of a glass window, it is considered that the following tasks still remain.

1) The manner of preventing water condensation by heating the glass window is not a desirable manner from the viewpoint of energy saving, since it consumes more energy.

2) Since heating of the glass window and cold retention of the refrigerator room or freezer room are reciprocal requirements, there is a possibility that it gives an adverse effect on the cold retention property of the interior.

To solve these, it is necessary to have a condition with no water condensation preventing visibility without heating the glass window. It is a task of the present invention to provide a technique to secure visibility of a glass window without heating the glass window.

As a method of preventing water condensation of a glass window, Patent Publications 2 and 3 disclose the use of a film substrate having a water absorption function. However, when one tries to apply the film to the surface of a glass window having a multiple glass structure, which is in contact with a refrigerator room or freezer room, it was found that the following technical problems exist. Because these are ones that water absorption function was designed by assuming the use on the outer surface of a showcase.

The surface of a glass window that is in contact with a refrigerator room or freezer room is subjected to a change of cold environment at each time when opening or closing the glass window. Unless a film substrate having a water absorbing function absorbs water when the door is open, and the absorbed water is released when the door is again closed, sometime the film substrate reaches the water absorption limit and takes no water absorption function. With this, water condensation will occur. In order to have a condition that the film can absorb water at the time of opening or closing the door, it is necessary that water be efficiently removed from the film when the window is tightly closed, and a necessity arises to design the film corresponding with this.

In the present invention, it was reached to find a film corresponding with the design idea and to find a method of securing visibility of a glass window. That is, a method of securing visibility of a glass window of the present invention is characterized by that the glass window has a multiple glass structure in which a plurality of glass plates face each other, that a film is formed on the glass plate surface that is exposed to a cold environment when the glass window is closed, that the film comprises a urethane resin prepared by a polymerization using at least a polyoxyalkylene-series polyol having an average molecular weight of 400-5000 and a hydrophobic polyol, that there is used as the hydrophobic polyol at lease one selected from an acrylic polyol having an average molecular weight of 500-5000 and a polyester polyol having an average molecular weight of 500-5000 and a hydroxy value of 10-200 mg KOH/g or either of them, and that the film absorbs water that is in contact with the film when the glass window is open, and the film releases the water absorbed in the film when the opened door glass is closed, thereby having a condition that the film can absorb water.

An article of a multiple glass structure that is typified by double-glazing is superior in heat insulation as compared with a single glass plate. Due to superior heat insulation, in case that a glass plate surface in a cold environment has been brought into a warm environment, the glass plate surface tends to be maintained under a cooled condition. In the present invention, the above film is formed on a glass plate surface of a glass window that is in contact with a cold environment. This has made it easy to suppress the occurrence of water condensation that prevents visibility of the glass window, even if repeating the opening and closing operations of the glass window.

The reason why the above film is successful in making it easy to suppress the occurrence of water condensation preventing visibility of the glass window even if repeating the opening and closing operations of the glass window, that is, the reason why it is possible to efficiently remove water from the film when the glass is tightly closed, is considered that it has a rigid structure, that is, a structure high in crosslinking density, for a resin having water-absorbing property.

Upon polymerization of the urethane resin, a polyol of the raw material is made to be a polyoxyalkylene-series polyol having an average molecular weight of 400-5000 and a hydrophobic polyol that is at lease one selected from an acrylic polyol having an average molecular weight of 500-5000 and a polyester polyol having an average molecular weight of 500-5000 and a hydroxy value of 10-200 mg KOH/g, thereby making a urethane resin that is superior in water-absorbing property and high in crosslinking density.

This rigid structure is assumed to stably provide routes when water is absorbed or released, thereby smoothly removing water. Furthermore, in the present invention, average molecular weight means in principle number average molecular weight. Furthermore, the cold environment refers to preferably 15°C or below, more preferably 10°C or below, still more preferably 5°C or below, more preferably 5°C to -30°C. Furthermore, the warm environment refers to preferably 10°C or higher, more preferably 15°C or higher, still more preferably 20°C or higher, more preferably 15°C to 40°C.

It is preferable to make the above film have a water absorption percentage of 10-40 weight %, preferably 15-35 weight %, in order to make it efficient to make the film have a condition capable of absorbing water by releasing water absorbed in the film by the film when a glass window opened is tightly closed and also in order to promote suppression of the occurrence of water condensation preventing visibility of a glass window even if repeating the opening and closing operations of the glass window.

The reason why it is in the range is that, if the water absorption percentage is less than 10 weight %, water condensation preventing visibility of a glass window tends to occur when repeating the opening and closing operations of the glass window and that, if it is greater than 40 weight %, there are many cases in which it is forced to lower hardness of the film. The glass window is frequently wiped for cleaning. Therefore, if the film is low in hardness, the film tends to have scratches. This causes an adverse influence on visibility of the glass window.

Furthermore, in case that number average molecular weight of the polyoxyalkylene-series polyol is less than 400, the capacity of absorbing water is low. In case that the number average molecular weight exceeds 5000, strength of the film tends to lower.

In the present invention, in case that particularly the polyoxyalkylene series polyol is polyethylene glycol, it is preferable that the number average molecular weight is 400-2000, preferably 500-1600, in view of water absorbing property and strength of the film to be obtained.

The oxyethylene chain of the polyethylene glycol is superior in the water absorbing function and the capability of releasing water absorbed in the film even at a low temperature. The mechanism of absorbing water appears by that the oxygen moiety of the oxyethylene chain incorporates water as bound water. The mechanism of releasing water even at a low temperature makes it possible to efficiently remove water absorbed in the film, as long as it is in a low humidity condition even under a below freezing point environment, since the water absorbed by the oxyethylene chain exists as bound water and therefore does not freeze even under a below freezing point environment and exists in the film as supercooled water.

Thus, in view of the water condensation suppression effect under a below freezing point environment, it is preferable to use a polyethylene glycol having an oxyethylene chain. In case that the average molecular weight is less than 400, it is low in capability of absorbing water as bound water. In case that the average molecular weight exceeds 2000, defects such as hardening inferiority of the coating agent and lowering of the film strength tend to occur.

Furthermore, in the case of releasing water from the film after the water is absorbed into the film, a hard skeleton of the resin secures a network structure in the resin. Therefore, routes of water when releasing water from the water-absorbed oxyethylene chain become distinct, and the water absorption into the film and the water removal become smooth. To obtain this resin of a hard skeleton, it is preferable to use as a hydrophobic polyol at least one selected from an acrylic polyol having an average molecular weight of 500-5000, preferably 1000-4000, more preferably 1500-3500, and a polyester polyol having an average molecular weight of 500-5000, preferably 500-4000, more preferably 550-3000, and having a hydroxy value of 10-200 mg KOH/g, preferably 50-200 mg KOH/g, more preferably 100-200 mg KOH/g. Since a urethane resin polymerized by using these polyols brings about a rigid structure, it becomes effective in stably providing routes when water is absorbed and removed and in making the removal of water smooth.

It is preferable to make the acrylic polyol have an average molecular weight of 500-5000. In case that the average molecular weight is less than 500, there is a tendency that the network structure of the resin becomes small, that the routes of water when releasing water become narrow, and that the capacity of removing water lowers.

Furthermore, it is preferable to make the polyester polyol have an average molecular weight of 500-5000 and a hydroxy value of 10-200 mg KOH/g. In the case of the polyol, if it is out of this numeral range, there is a tendency that the routes of water when releasing water becomes narrow and that capacity of removing water lowers, for the reason that the network structure of the resin becomes small, that rigidity of the film lowers, etc.

Furthermore, in the present invention, it is preferable that the film further has a straight-chain polydimethylsiloxane, in which the number of dimethylsiloxane units (Si(CH₃)₂O) is 5-300, as a crosslinking unit, in order to make the surface of the film have slipping property to improve the wiping workability upon cleaning or the like.

Herein, the reason why the number of dimethylsiloxane units (Si(CH₃)₂O) is made to be 5-300 in the straight-chain polydimethylsiloxane is that it becomes difficult to introduce the straight-chain polydimethylsiloxane as a crosslinking unit into the urethane resin in case that the number of the dimethylsiloxane units is less than 5 or exceeds 300.

As this reason, the following is considered. In case that the number of the dimethylsiloxane units is less than 5, there is no advantageous effect for improving slipping property of the film. On the other hand, in the case of exceeding 300, the moiety of the straight-chain polydimethylsiloxane, on which the urethane bond is formed, becomes relatively low. Therefore, there increases a possibility that upon forming the resin the straight-chain polydimethylsiloxane is not incorporated as a crosslinking unit into the resin. As a result, the obtained film becomes one that the straight-chain polydimethylsiloxane tends to dissolve and go away.

Then, in view of the above-mentioned advantageous effect for improving slipping property and the wiping workability upon cleaning or the like of the film, it is preferable that the straight-chain polydimethylsiloxane is added in 0.05-3.0 weight % by weight concentration relative to the film.

Furthermore, in the present invention, it is preferable to make the film have a film thickness of from 3µm to 60µm. Since the amount of water absorption of the film tends to depend on the film thickness too, it is preferable that the film thickness is made to be 3µm or greater, preferably 10µm or greater, more preferably 20µm or greater, in order to make it possible to secure a certain amount of water absorption in the film. On the other hand, unfavorable conditions are brought into the production of the film by trying to form a thick film. Therefore, it is preferable that the film thickness is made to be 60µm or less, preferably 55µm, more preferably 50µm.

### BRIEF DESCRIPTION OF THE DRAWINGS

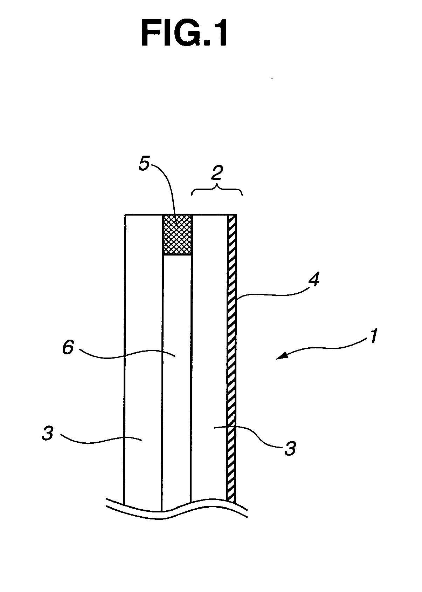

[Fig. 1] It is a sectional view explaining an essential part of an example of a glass window of a refrigerator or freezer of the present invention.

### DETAILED DESCRIPTION

Since a glass window has a film showing a reversible water absorption and release property, the film absorbs water that is in contact with the film, and the water absorbed in the film is efficiently released from the film if it is in a low humidity condition. Thus, the film tends to become a water absorbable condition, and visibility of the glass window is maintained.

An example of a glass window of the present invention is explained by the drawing. Fig. 1 is a sectional view explaining an essential part of one example of a glass window of the present invention. The glass window has a multiple glass structure in which a plurality of glass plates 3 face each other. An inner space 6 is formed by disposing a spacer 5 at a periphery. A glass window 2 has a film 4 and a glass plate 3. It is preferable that an airtight or watertight structure is formed by using an adhesive between the spacer 5 and the glass plate 3. When the glass window 1 becomes a tightly closed condition, the film 4 is exposed to a cold environment. A typical example to become such condition is a case in which the glass window 1 has been used for a door of a refrigerator or freezer.

As the glass plate 3, it is possible to use one made of a soda-lime-silicate glass, no-alkali glass, borosilicate glass, etc. It is particularly preferable to use a plate glass that is normally used for vehicular, architectural and industrial glasses, etc. and that is one made by float method, duplex method, roll-out method, etc. As the glass type, it is possible to use clear glass, various colored glasses such as green glass and bronze glass, various functional glasses such as UV and IR cutting glass and electromagnetic shielding glass, glasses usable for fire-proof glasses such as wired glass, low-expansion glass and zero-expansion glass, air-quenched glass, chemically strengthened glass, and laminated glass. Besides the above-mentioned inorganic glasses, it is also possible to use a plastic-made glass, etc.

The plate thickness of the glass plate 3 is not particularly limited, but from 0.1mm to 10mm is preferable, and particularly from 0.2mm to 5.0mm is preferable.

The spacer 5 is used for providing a certain space in order to enhance heat insulation capacity as a multiple glass structure in which the glass plates 3 face each other. The material used is not particularly limited. Those by general-purpose resins, such as vinyl chloride resin, polyethylene resin, polystyrene resin, ABS resin and acrylic resin, those made of metals, engineering plastics, etc. are used.

A structure in which dry air or nitrogen gas is sealed into the inner space 6 is common. It is possible to enhance heat insulation capability by sealing an inert gas such as helium, neon, argon, krypton and xenon each into the inner space.

As the film 4, a film having a polyurethane containing a polyoxyalkylene chain is used. This is because polyurethane has an elasticity that is characteristic of urethane and therefore is superior in wear resistance as compared with other resins. In view of economy, it is preferable that the film is made of a resin alone.

Polyurethane is obtained by reacting isocyanate prepolymer with polyol. By suitably selecting polyol, it is possible to set the function of the film. It is possible to obtain a film by applying a coating agent having isocyanate prepolymer, polyol and other chemical species, and/or their reaction product by a publicly known coating means, such as spin coating, dip coating, flow coating, and curtain coating, to the glass plate surface, followed by curing. Upon this, a primer layer may be formed on the glass substrate.

For the isocyanate prepolymer, it is possible to use diisocyanate, preferably a trifunctional polyisocyanate having a biuret and/or isocyanurate structure using hexamethylene diisocyanate as the starting material. The substance has weather resistance, chemical resistance and heat resistance and is effective particularly in weather resistance. Furthermore, besides the substance, it is also possible to use diisophorone diisocyanate, diphenylmethane diisocyanate, bis(methylcyclohexyl)diisocyanate, and trylenediisocyanate, etc.

It is preferable to make an adjustment that the number of isocyanate groups existing in the isocyanate component becomes one to three times, more preferably 1.2 times to 2.5 times, the number of hydroxy groups existing in the polyol component. In case that it is less than one time, hardenability of the coating agent becomes inferior, and the film formed is soft, and durability such as weather resistance, solvent resistance and chemical resistance lowers. On the other hand, in the case of exceeding three times, the film production tends to become difficult by overcure.

In a water-absorbing polyol, such as polyoxyalkylene-series polyol, that provides a film with a water-absorbing property, hydroxyl groups in the molecule react with isocyanate groups of the isocyanate prepolymer to generate urethane bonds. This makes it possible to introduce a water-absorbing property into the polyurethane.

The amount of the water-absorbing polyol used is adjusted, and thereby the amount of the water-absorbing component in the film derived from the water-absorbing polyol is adjusted so that water absorption percentage of the film upon water absorption saturation becomes preferably 15 weight % or greater. As the water-absorbing component, it is possible to use one derived from an oxyalkylene-series polyol. It is preferable to have oxyethylene chain, oxypropylene chain, or the like. A polyethylene glycol having an oxyethylene chain superior in water-absorbing property is particularly preferable.

In the case of using polyethylene glycol, it is preferable to have a number average molecular weight of 400-2000 in view of water-absorbing property and strength of the film to be obtained.

Furthermore, a hydrophobic polyol can improve water resistance and wear resistance of the film. Furthermore, it ensures a network structure in the film. Routes of water upon releasing water from the oxyethylene chain that has absorbed water become distinct. Thus, it becomes possible to make water absorption into the film and water removal smooth. As the hydrophobic polyol, acrylic polyol, polycarbonate polyol, polycaprolactone polyol are preferable.

In the case of acrylic polyol, it has both of flexibility and scratch resistance, and makes the function of water-absorbing property of the film hard to lower. As a result, it is possible to improve water resistance and wear resistance of the film. In addition to this, acrylic polyol is effective for shortening of a leveling step that levels the film thickness deviation upon applying a coating agent for forming a film to a substrate. Therefore, it is preferable to use this acrylic polyol in order to obtain a flat film surface suitable for freezer and refrigerator showcases.

The ratio of the polyoxyalkylene-series polyol to the hydrophobic polyol is adjusted so that water absorption percentage of the film becomes 10-40 weight %. For example, in the case of polyethylene glycol and acrylic polyol, it is preferable to have a component ratio so that polyethylene glycol : acrylic polyol = 50:50 to 70:30 by weight ratio.

It is preferable to introduce a hydrophobic component derived from the hydrophobic polyol so that water absorption percentage of the film is in the above-mentioned range, preferably to introduce it so that pencil hardness of the film to be obtained conforming to JIS K5600 (1999) becomes HB to H upon water absorption saturation of the film. This is because wiping workability of freezer and refrigerator showcases cleaning and the like becomes difficult when hardness of the film is low.

Furthermore, in view of wiping workability of the above-mentioned cleaning and the like, it is possible to introduce into the film a straight-chain polydimethylsiloxane having at its both ends functional groups capable of reacting with isocyanate groups. A straight-chain polydimethylsiloxane preferably introduced into the film can be introduced as a crosslinking unit in the resin forming the film.

As the functional groups capable of reacting with isocyanate groups, it is possible to use functional groups containing active hydrogens bonded to oxygen, nitrogen and sulfur, which are large in electronegativity, such as hydroxy group, carboxyl group, amino group, imino group, mercapto group, sulfino group and sulfo group. Of these, in view of handling easiness, pot life when made into a coating agent, and durability of the film to be obtained, it is preferable to use hydroxy groups as the functional groups capable of reacting with isocyanate groups.

Furthermore, in the case of forming a film by applying the coating agent to a glass plate, it is preferable to apply a liquid having a silane coupling agent, prior to applying the coating agent, in order to improve adhesion between the substrate and the film. As a suitable silane coupling agent, it is possible to cite aminosilane, mercaptosilane, and epoxysilane. Preferable ones are γ-glycidoxypropyltrimethoxysilane, γ-aminopropyltriethoxysilane, etc.

### EXAMPLES

In the following, the present invention is specifically explained by examples. Quality evaluations were conducted on articles, on which films obtained by the present examples and comparative examples had been formed, by methods shown in the following.

[Water absorption percentage of the film]: After retention for 12 hours in an environment of a humidity of 50% and a temperature of 55°C, retention was conducted for 12 hours at the same humidity in an environment of a temperature of 25°C. At that time, weight (a) of an article having the film formed thereon was measured. A 43°C saturated water vapor was brought into contact with the film. Immediately after that, a water film on the film surface was wiped, and then weight (b) of the article was measured. A value obtained by a mathematical formula of [b-a]/[a-(weight of the glass plate)]×100(%) was taken as water absorption percentage upon water absorption saturation. That is, water absorption percentage is one representing by weight percentage the amount of water absorbable relative to weight of the film. The value of (a) herein corresponds to one under a condition that the film has not absorbed water.

[Release rate of water absorbed in the film]: With respect to the film under a water absorption saturation condition obtained as above, one that the period of time for reaching the weight (a) from the weight (b) upon putting it in an environment of a humidity of 50% and a temperature of 25°C was 3 minutes or shorter was judged as pass (○) as being a film superior in water release property, and one that did not satisfy this was judged as failure (×).

[Water condensation suppression effect of the film]: A fogging condition when it was retained for 1 minute in a saturated water vapor from a warm water set at 43°C in conformity with "JIS S 4030 an antifogging agent for eye glasses test method", and a fogging condition caused by exhaled air when it was taken out in ordinary temperature (23°C, humidity 63%) after the retention are observed. This operation as one cycle was conducted 30 cycles. One having no abnormality in external appearance of the film and no occurrence of fogging was judged as pass (○), and one having the occurrence of fogging was judged as failure (×).

[Water condensation suppression effect of the film in a frozen environment]: After retention for 30 minutes in a freezer set at -25°C, external appearance, fogging condition, and fogging caused by exhaled air when it was taken out in ordinary temperature (23°C, humidity 63%) are observed. This operation as one cycle was conducted 10 cycles. One having no abnormality in external appearance of the film and no occurrence of fogging was judged as pass (○), and one having the occurrence of fogging was judged as failure (×).

[Traverse wear resistance]: External appearance and exhaled air antifogging property when a flannel (cotton No. 300) was reciprocated 5000 times on the film surface with a load of 4.9 N/4cm² were measured. One with no abnormality was judged as pass (○), and one with abnormality was judged as failure (×).

[Pencil hardness]: The film surface was scratched with a pencil five times in conformity with "JIS K 5600 coating general test methods". A pencil caused a tear of the film by less than 2 times was judged as pencil hardness. The pencil hardness can be used as an indicator of scratch resistance.

[Water resistance]: An immersion was conducted for 24 hours in a water of 40±2°C. One having no abnormality, no occurrence of fogging caused by exhaled air and a lowering of pencil hardness within one rank after the immersion was judged as pass (○), and one having a lowering two ranks or more was judged as failure (×).

[Sipping property]: A square slipping piece of a contact area of 40cm² (length of one side: 6.3cm) with a load of 200g was put on the film, and slipping property was measured, in conformity with "JIS K 7125 plastic film and sheet friction coefficient test method". The bottom surface (the contact surface with the test piece) was covered with a flannel (cotton No. 300) on the assumption of a cloth wiping in the actual use.

Here, in coefficient of static friction derived from the measured value, one that was 0.8 or less when the film was in a condition of no water absorption and 0.9 or less when the film was in a water absorption saturation condition was judged as pass (○), and one did not satisfy this was judged as failure (×).

In case that the film to be tested is formed of a resin alone, the evaluation results of traverse wear resistance, pencil hardness, water resistance, and slipping property may be substituted as ones for evaluating rigidity of the resin.

[Contact angle of a water drop to the film]: With respect to the contact angle of a water drop to the film, it was measured in conformity with "JISR 3257 Substrate glass surface wettability test method". A test piece cut into a 100mm square was retained for 12 hours in an environment of a humidity of 50% and a temperature of 55°C and then retained for 12 hours at the same humidity and in an environment of a temperature of 25°C. That was used as a test piece in a condition where the film did not absorb water. The test piece was put in a contact angle meter (CA-2 type) made by Kyowa Interface Chemical, a water of 2µl was dropped onto the film, and the contact angle of the water drop was measured. Furthermore, a 43°C saturated water vapor was brought into contact with the film of the same test piece for 5 minutes to turn the film into a water absorption saturation condition.
The test piece was put in the contact angle meter, a water of 2µl was dropped onto the film, and the contact angle of the water drop was measured.

[Film thickness measurement]: Upon preparing the sample, a masking film (a trade name "SPV-400X" made by NITTO DENKO CORPORATION) is adhered to a part of the substrate, and the masking film is removed after the preparation of an article having the film formed thereon. Then, the film thickness of the film was measured by measuring a step portion formed by the film and the substrate with a high-precision microfigure measuring instrument (SUREFCORDER ET 4000A made by Kosaka Laboratory Ltd.).

### EXAMPLE 1

### (Preparation of a coating agent for forming the film)

As an isocyanate having isocyanate groups, a biuret type polyisocyanate of hexamethylene diisocyanate (a trade name "N3200" made by Sumitomo Bayer Urethane Co.) was used as coating agent A.

There were prepared a polyethylene glycol having an average molecular weight of 1000 and a solution ("Desmophen A450BA" made by Sumika Bayer Urethane Co., Ltd.) having 50 weight % of an acrylic polyol having an average molecular weight of 3000 and a hydroxy value of 33 mg KOH/g, followed by mixing so that the weight ratio of the polyethylene glycol to the acrylic polyol became "polyethylene glycol : acrylic polyol = 60:40". This was used as coating agent B.

33g of the coating agent A was added to and mixed with 100g of the coating agent B so that the number of isocyanate groups existing in the isocyanate component of the coating agent A was made to be in an amount that was 1.6 times the number of hydroxy groups existing in the polyol component in the coating agent B. Isobutyl acetate as a diluting solvent was added to and mixed with a mixture of the coating agent A and the coating agent B so that the total amount of the urethane component became 35 weight %, thereby preparing a coating agent for forming the film.

### (Film formation on glass plate surface)

A solution was prepared so that γ-aminopropyltriethoxysilane (LS-3150, made by Shin-Etsu Silicone Co.) became 1 weight % by a modified alcohol (EKINEN F-1, made by Kishida Chemical Co., Ltd.) formed of 90 weight % of ethanol and 10 weight % of isopropyl alcohol. Then, the surface of a glass plate of 100mm×100mm (3.5mm thickness) obtained by float method was wiped with a wiper (a trade name "BEMCOT", type M-1, 50mm×50mm, made by OZU CORPORATION) formed of cellulose fibers, which had absorbed the solution, thereby applying the solution. After drying in room temperature condition, the film surface was washed with the wiper using tap water, thereby preparing a glass plate.

The above-obtained coating agent for forming a film was applied on the glass plate by spin coating, and the coated glass plate was subjected to a heat treatment at about 100°C for about 30 minutes, thereby obtaining a glass plate having a film of a film thickness of 56µm formed thereon.

As shown in Table 1, the film obtained by the above method was confirmed to be superior in various performances.

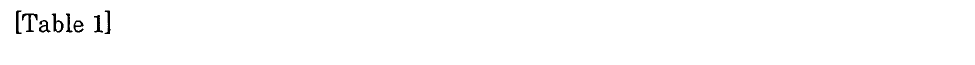

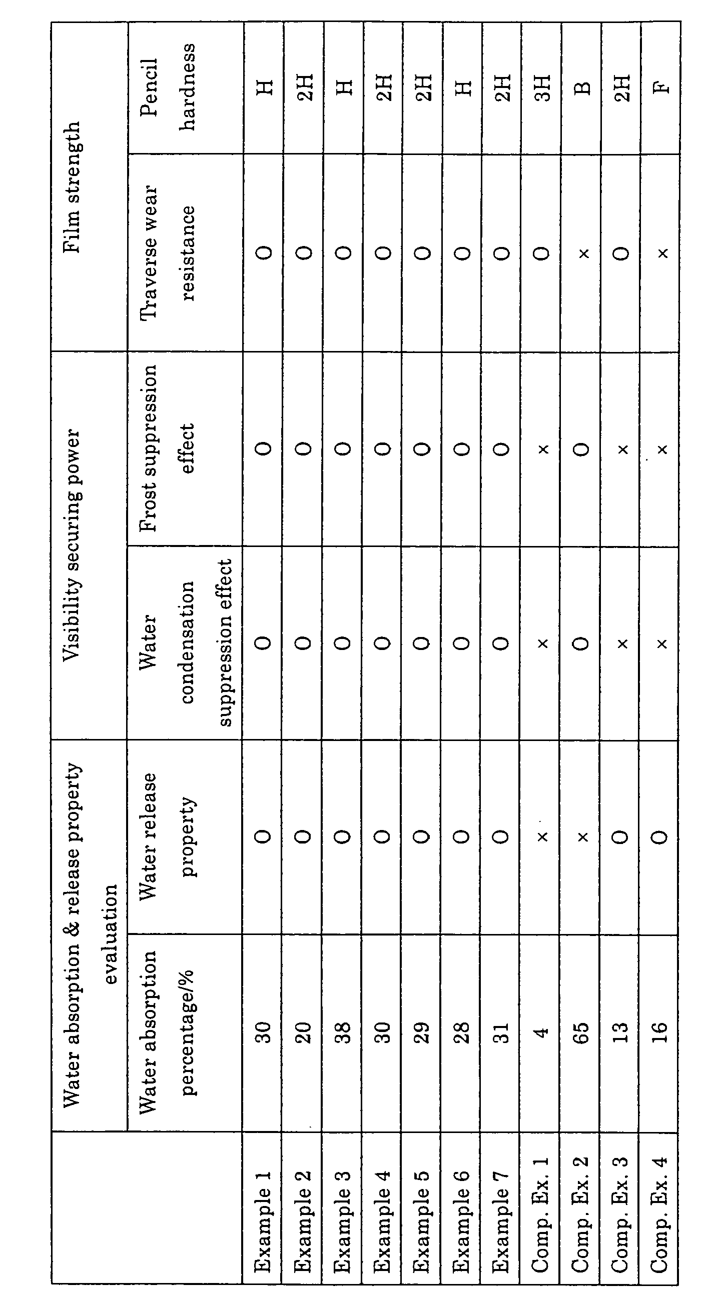

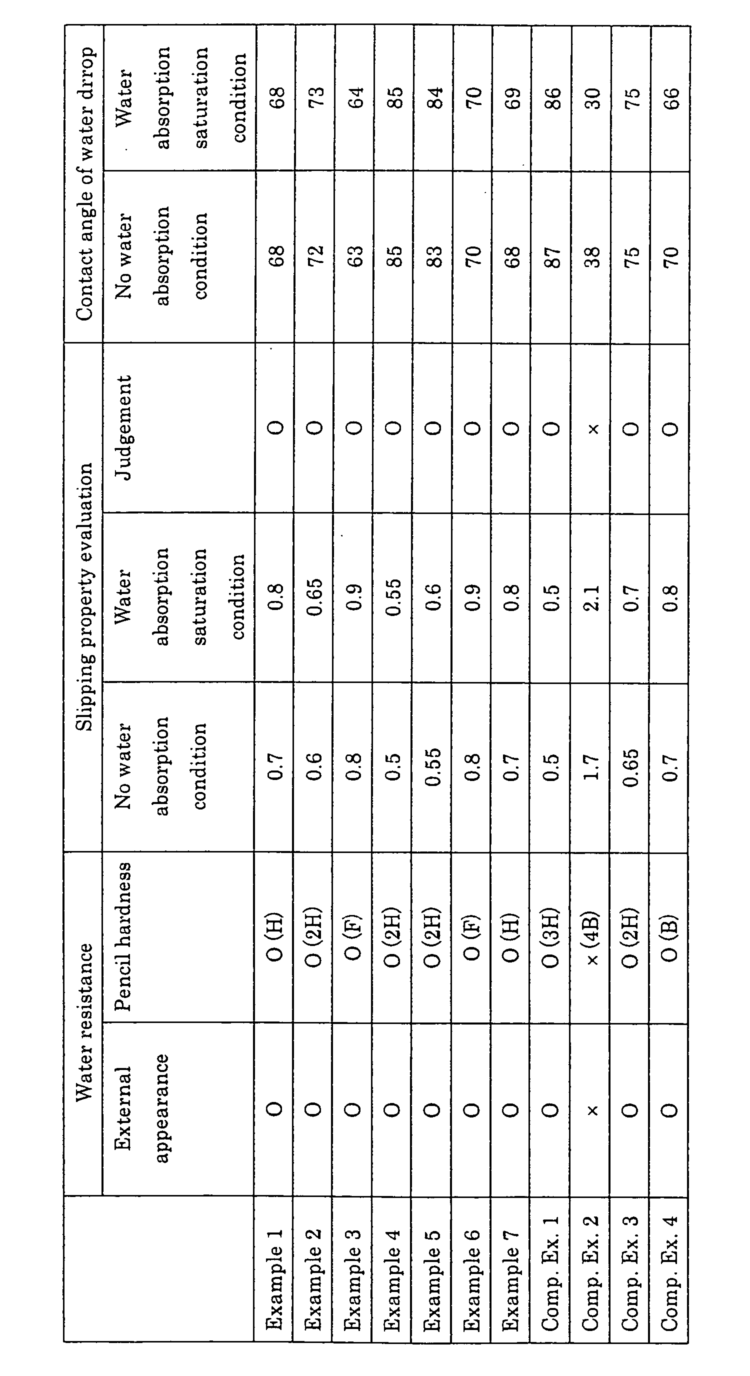

### EXAMPLE 2

The same operation as that of Example 1 was conducted, except in that the mixing was conducted in the preparation of the coating agent B in Example 1 so that the weight ratio of each component became "polyethylene glycol : acrylic polyol = 50:50", and that the amount of the coating agent A added to and mixed with 100g of the coating agent B was 35g so that the number of isocyanate groups existing in the isocyanate component of the coating agent A was 1.8 times the number of hydroxy groups existing in the polyol component in the coating agent B, thereby obtaining a glass plate having a film of a film thickness of 27µm formed thereon.

As shown in Table 1, the film obtained by the above method was confirmed to be superior in various performances.

### EXAMPLE 3

The same operation as that of Example 1 was conducted, except in that the mixing was conducted in the preparation of the coating agent B in Example 1 so that the weight ratio of each component became "polyethylene glycol : acrylic polyol = 70:30", and that the amount of the coating agent A added to and mixed with 100g of the coating agent B was 30g so that the number of isocyanate groups existing in the isocyanate component of the coating agent A was 2.0 times the number of hydroxy groups existing in the polyol component in the coating agent B, thereby obtaining a glass plate having a film of a film thickness of 33µm formed thereon.

As shown in Table 1, the film obtained by the above method was confirmed to be superior in various performances.

### EXAMPLE 4

The same operation as that of Example 1 was conducted, except in that, to a mixture of the coating agent A and the coating agent B, in which the total amount of the urethane component in Example 1 was 35 weight %, a both-end hydroxy, straight-chain, polydimethylsiloxane (trade name "DMS-S12" made by AZmax Corporation), in which the number of dimethylsiloxane units was 7, was added by 1.0 weight % relative to the total amount of the urethane component, thereby obtaining a glass plate having a film of a film thickness of 20µm formed thereon.

As shown in Table 1, the film obtained by the above method was confirmed to be superior in various performances.

### EXAMPLE 5

The same operation as that of Example 4 was conducted except in that a both-end hydroxy, straight-chain, polydimethylsiloxane (trade name "DMS-S27" made by AZmax Corporation), in which the number of dimethylsiloxane units was 243, was used, thereby obtaining a glass plate having a film of a film thickness of 8µm formed thereon.

As shown in Table 1, the film obtained by the above method was confirmed to be superior in various performances.

### EXAMPLE 6

The same operation as that of Example 1 was conducted except in that, in the preparation of the coating agent B in Example 1, a solution (trade name "PC-61" made by Nippon Polyurethane Co.) having 80 weight % of a polycarbonate polyol having an average molecular weight of 1400 and a hydroxy value of 124 mg KOH/g as a polyol showing hydrophobicity was used in place of acrylic polyol, that the mixing was conducted so that the mixing ratio of each component became "polyethylene glycol : polycarbonate polyol = 60:40", and that 73g of the coating agent A was added to and mixed with 100g of the coating agent B so that the number of isocyanate groups existing in the isocyanate component of the coating agent A was 1.7 times the number of hydroxy groups existing in the polyol component in the coating agent B, thereby obtaining a glass plate having a film of a film thickness of 40µm formed thereon.

As shown in Table 1, the film obtained by the above method was confirmed to be superior in various performances.

### EXAMPLE 7

The same operation as that of Example 1 was conducted except in that, in the preparation of the coating agent B in Example 1, a polycaprolactone triol (trade name "PLACCEL 308" made by DAICEL CHEMICAL INDUSTRIES, LTD.) having an average molecular weight of 550 and a hydroxy value of 198 mg KOH/g as a polyol showing hydrophobicity was used in place of acrylic polyol, that the mixing was conducted so that the mixing ratio of each component became "polyethylene glycol : polycaprolactone triol = 60:40", and that 64g of the coating agent A was added to and mixed with 100g of the coating agent B so that the number of isocyanate groups existing in the isocyanate component of the coating agent A was 1.6 times the number of hydroxy groups existing in the polyol component in the coating agent B, thereby obtaining a glass plate having a film of a film thickness of 30µm formed thereon.

As shown in Table 1, the film obtained by the above method was confirmed to be superior in various performances.

### COMPARATIVE EXAMPLE 1

The same operation as that of Example 1 was conducted except in that, in the coating agent B, only acrylic polyol was used without using polyethylene glycol, and that 18g of the coating agent A was added to and mixed with 100g of the coating agent B so that the number of isocyanate groups existing in the isocyanate component of the coating agent A was 1.6 times the number of hydroxy groups existing in the polyol component in the coating agent B, thereby obtaining a glass plate having a film of a film thickness of 11µm formed thereon.

As shown in Table 1, as shown in Table 1, the film obtained by the above method was one not showing at all the water condensation suppression effect.

### COMPARATIVE EXAMPLE 2

The same operation as that of Example 1 was conducted except in that, in the coating agent B, only polyethylene glycol was used without using acrylic polyol, and that 51g of the coating agent A was added to and mixed with 100g of the coating agent B so that the number of isocyanate groups existing in the isocyanate component of the coating agent A was 1.4 times the number of hydroxy groups existing in the polyol component in the coating agent B, thereby obtaining a glass plate having a film of a film thickness of 28µm formed thereon.

As shown in Table 1, the film obtained by the above method was such that the cloth adhered to the film surface in the traverse wear resistance test to make the external appearance inferior, and it was inferior in slipping property. There was a sticky feeling on the film surface. Furthermore, 6 minutes was required until water was removed in the test for the release rate of water absorbed in the film. Therefore, it was also a film inferior in water absorption and release.

### COMPARATIVE EXAMPLE 3

The same operation as that of Example 1 was conducted, except in that the mixing was conducted in the preparation of the coating agent B in Example 1 so that the weight ratio of each component became "polyethylene glycol : acrylic polyol = 25:75", and that the amount of the coating agent A added to and mixed with 100g of the coating agent B was in 20g so that the number of isocyanate groups existing in the isocyanate component of the coating agent A was 1.4 times the number of hydroxy groups existing in the polyol component in the coating agent B, thereby obtaining a glass plate having a film of a film thickness of 15µm formed thereon.

As shown in Table 1, the film obtained by the above method was inferior in water condensation suppression effect.

### COMPARATIVE EXAMPLE 4

The same operation as that of Example 1 was conducted except in that, in the preparation of the coating agent B in Example 1, a polycaprolactone triol (trade name "PLACCEL 305" made by DAICEL CHEMICAL INDUSTRIES, LTD.) having an average molecular weight of 300 and a hydroxy value of 305 mg KOH/g as a polyol showing hydrophobicity was used in place of acrylic polyol, that the mixing was conducted so that the mixing ratio of each component became "polyethylene glycol : polycaprolactone triol = 60:40", and that 73g of the coating agent A was added to and mixed with 100g of the coating agent B so that the number of isocyanate groups existing in the isocyanate component of the coating agent A was 1.8 times the number of hydroxy groups existing in the polyol component in the coating agent B, thereby obtaining a glass plate having a film of a film thickness of 19µm formed thereon.

As shown in Table 1, the article obtained by the above method was inferior in water condensation suppression effect. Furthermore, the film was weak, and the film was scratched in the traverse wear resistance test. Thus, it became inferior in external appearance.

### EXPLANATION OF SIGNS

- 1: a glass window
- 2: a glass plate having a film formed thereon
- 3: a glass plate
- 4: a film
- 5: a spacer
- 6: an inner space

## Claims

1. A method of securing visibility of a glass window, the method of securing visibility of a glass window being **characterized by** that the glass window has a multiple glass structure in which a plurality of glass plates face each other, that a film is formed on the glass plate surface that is exposed to a cold environment when the glass window is closed, that the film comprises a urethane resin prepared by a polymerization using at least a polyoxyalkylene-series polyol having an average molecular weight of 400-5000 and a hydrophobic polyol, that there is used as the hydrophobic polyol at lease one selected from an acrylic polyol having an average molecular weight of 500-5000 and a polyester polyol having an average molecular weight of 500-5000 and a hydroxy value of 10-200 mg KOH/g, such that the film absorbs water that is in contact with the film when the glass window is open, and the film releases the water absorbed in the film when the opened door glass is closed, thereby having a condition that the film can absorb water.

2. A method of securing visibility of a glass window as claimed in claim 1, which is **characterized by** that the film has a water absorption percentage of 10-40 weight %.

3. A method of securing visibility of a glass window as claimed in claim 1 or 2, which is **characterized by** that the polyoxyalkylene-series polyol is a polyethylene glycol having an average molecular weight of 400-2000.

4. A method of securing visibility of a glass window as claimed in any of claim 1 to claim 3, which is **characterized by** that the film further has a straight-chain polydimethylsiloxane, in which the number of a dimethylsiloxane unit (Si(CH₃)₂O) is 5-300, as a crosslinking unit.

5. A method of securing visibility of a glass window as claimed in any of claim 1 to claim 4, which is **characterized by** that the film has a film thickness of 3-60 µm.
